# FASCICULE DE BREVET EUROPEEN

(11) **EP 2 021 984 B1**
(45) Date de publication et mention de la délivrance du brevet: **18.08.2010**
(21) Numéro de dépôt: 07729702.6
(22) Date de dépôt: 31.05.2007
(51) Int. Cl.: G06K 19/07

(54) **DISPOSITIF DE SECURITE DESTINE A ETRE CONNECTE A UNE UNITE DE TRAITEMENT D'UN SIGNAL AUDIO/VIDEO ET PROCEDE UTILISANT UN TEL DISPOSITIF**
FÜR VERBINDUNG MIT EINER VERARBEITUNGSEINHEIT FÜR EIN AUDIO/VIDEO-SIGNAL GEDACHTE SICHERHEITSEINRICHTUNG UND VERFAHREN ZUR VERWENDUNG EINER SOLCHEN EINRICHTUNG
A SECURITY DEVICE MEANT TO BE CONNECTED TO A PROCESSING UNIT FOR AUDIO/VIDEO SIGNAL AND METHOD USING SUCH A DEVICE

(30) Priorité: 01.06.2006 EP 06114849
(43) Date de publication de la demande: 11.02.2009
(73) Titulaire: Nagravision S.A., 1033 Cheseaux-sur-Lausanne (CH)
(72) Inventeur: OSEN, Karl, CH-1282 Dardagny (CH); FISCHER, Nicolas, CH-1290 Versoix (CH)
(74) Mandataire: Leman Consulting S.A.
(86) Numéro de dépôt international: PCT/EP2007/055290
(87) Numéro de publication internationale: WO 2007/138091

(56) Documents cités:
- EP-A2- 1 457 922
- US-A1- 2004 134 992

## Description

### DOMAINE TECHNIQUE

La présente invention concerne le domaine de l'accès à des données à accès conditionnel, en particulier du type audio/vidéo, destiné notamment à la télévision à péage. Elle concerne plus particulièrement un dispositif de sécurité destiné à être connecté à une unité de traitement d'un signal audio/vidéo, ce dispositif comprenant des moyens pour déchiffrer un flux audio/vidéo, une interface de type ISO 7816 et une interface de type USB.

La présente invention concerne en outre un procédé de traitement d'un signal audio/vidéo au moyen d'un dispositif comprenant des moyens pour déchiffrer un flux audio/vidéo, une interface de type ISO 7816 et une interface de type USB.

### TECHNIQUE ANTÉRIEURE

De façon bien connue, pour pouvoir accéder à des données chiffrées et visionner un événement de télévision à péage, tel qu'un film, un événement sportif ou un jeu notamment, plusieurs flux sont diffusés à destination d'un ensemble d'unités multimédia formées d'un décodeur et d'un module de sécurité. Ces flux sont notamment d'une part le fichier de l'événement sous forme d'un flux de données chiffrées et d'autre part, un flux de messages de contrôle ECM permettant le déchiffrement du flux de données. Le contenu du flux de données est chiffré par des "mots de contrôle" (Control words = CW), renouvelés régulièrement. Le deuxième flux est appelé flux ECM (Entitlement Control Message) et peut être formé notamment de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle CW est obtenu en déchiffrant les messages de contrôle ECM au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Dans la majorité des systèmes actuels, le flux de données est reçu sous forme chiffrée par le décodeur. Celui-ci reçoit également le flux de messages de contrôle ECM. Il transmet ces messages ECM au module de sécurité qui les déchiffrent de façon à en extraire les mots de contrôle cw. Ces mots de contrôle sont transmis au décodeur, par exemple sous forme chiffrée au moyen d'une clé commune au module de sécurité et au décodeur. Le décodeur contient un module de désembrouillage (Descrambler) en charge du déchiffrement du flux de données à l'aide des mots de contrôle.

Lors du déchiffrement d'un message de contrôle ECM, il est en outre vérifié, dans le module de sécurité, que le droit pour accéder au contenu considéré est présent. Ce droit peut être géré par des messages d'autorisation EMM (Entitlement Management Message) qui chargent un tel droit dans le module de sécurité.

La clé de chiffrement des messages de contrôle est elle-même transmise dans des messages d'autorisation EMM, de façon à permettre l'accès aux mots de contrôle.

Actuellement, une grande partie des modules de sécurité utilisés dans les systèmes d'accès à des données à accès conditionnel et en particulier dans les systèmes liés à la télévision à péage sont des cartes à puce. Généralement, les cartes à puce utilisées répondent à la norme ISO 7816. De façon bien connue, les cartes conformes à cette norme comprennent huit contacts accessibles depuis l'extérieur au moyen d'éléments qui forment une jonction électrique avec les contacts de la carte lorsque celle-ci est insérée d ins un lecteur. Six des huit contacts ont une fonction bien définie dans la norme ISO 7816 citée ci-dessus. En particulier, un contact Vcc est chargé d'assurer l'alimentation électrique de la puce de la carte, un contact GND assure la mise à la masse de cette puce, un contact RST permet la réinitialisation, un contact Vpp assure l'alimentation de la puce en tension de programmation, un contact CLK permet l'entrée d'un signal d'horloge et un contact I/O permet l'entrée/sortie des données.

Ces cartes sont particulièrement adaptées à un système de télévision à péage puisqu'elles permettent d'assurer la sécurité requise pour ce genre d'application. Elles souffrent toutefois d'un défaut. Elles ne permettent pas des vitesses de traitement de données importantes. Ainsi, lorsque de telles cartes sont utilisées pour déchiffrer des messages de contrôle ECM afin d'en extraire les mots de contrôle, leur capacité de traitement est suffisante. Par contre, de telles cartes ne sont pas en mesure de déchiffrer des flux aussi importants que des flux de données.

Il existe actuellement des cartes susceptibles de supporter deux modes de fonctionnement différents, en particulier un mode répondant à la norme ISO 7816 et un autre mode utilisant le protocole USB. Ce protocole USB permet des débits suffisamment rapides pour pouvoir être appliqué au déchiffrement de données à la volée.

Dans les cartes à puce conformes à la norme ISO 7816, deux contacts sur les huit existants ne sont pas réservés à une fonction précise, mais peuvent être utilisés au gré des besoins de l'application. Selon la norme USB, les données sont transmises par deux fils, D+ et D-, deux autres fils étant prévus pour assurer l'alimentation électrique. Certaines cartes à puces existantes utilisent donc les deux contacts libres d'une carte ISO 7816 pour assurer le transfert des données selon la norme USB.

Pour une application conventionnelle, dans les cartes à puce ISO 7816, la fréquence d'horloge utilisée est généralement inférieure à 5 MHz. Le signal d'horloge est généré dans un dispositif extérieur, puis transmis à la carte par le contact CLK de la puce.

Dans un système utilisant le protocole USB pour le traitement de flux audio/vidéo, la fréquence d'horloge doit non seulement être très précise, mais elle doit être relativement élevée. Généralement, la fréquence d'horloge en mode USB est de 30 MHz et les fréquences de transfert des données sont de 1,5 Mb/s (low speed) ou de 12 Mb/s (full speed) selon la norme USB 1, et de 480 Mb/s (high speed) selon la norme USB 2.0. Une fréquence élevée et une grande précision imposent la présence d'un oscillateur tel qu'un oscillateur à quartz, qui est intégré dans le module USB lui-même. Lorsque le module USB a la forme d'une carte à puce, des contraintes de volume notamment doivent être respectées. Ceci rend la fabrication de la carte relativement complexe et coûteuse.

De plus, dans un système capable de fonctionner en mode ISO 7816 et en mode USB, il est nécessaire de gérer des fréquences très différentes de la façon la plus souple possible.

Le document EP 1 457 922 décrit une carte à puce fonctionnant en mode ISO 7816 et en mode USB, qui est capable de commuter automatiquement dans le mode requis. Cette commutation automatique se fait par la détection d'une tension sur le contact D+ ou D- de la puce. Si une tension est présente sur l'un de ces contacts, il est considéré que la carte à puce fonctionne en mode USB. Si aucune tension n'est présente sur l'un de ces contacts, la carte fonctionne en mode ISO 7816.

Ce mode de détection implique qu'il est tout d'abord nécessaire de générer une tension ou de supprimer la tension sur les contacts D+ et D- du mode USB pour indiquer à la carte qu'il y a un changement de mode. Les données requises peuvent seulement être transmises lorsque le changement de mode a été pris en compte. Une telle contrainte implique que ce mode de réalisation n'est pas adapté à une application dans laquelle le mode change fréquemment, en particulier dans le cas où il y a de fréquents changements du mode ISO 7816 pour le traitement des messages de contrôle ECM au mode USB pour le traitement du flux audio/vidéo. Selon un mode de réalisation particulier de cette invention, la détection du mode USB se fait en imposant un 1 logique sur le contact CLK. Il est clair que dans ce cas, le contact n'est plus disponible.

La présente invention se propose de résoudre les problèmes des dispositifs de l'art antérieur en réalisant un module de sécurité capable de traiter aussi bien des données selon la norme ISO 7816 que selon le protocole USB. Ce module de sécurité est en outre en mesure de commuter automatiquement de l'un des modes à l'autre, ceci de façon fréquente et rapide.

En outre, ce dispositif s'affranchit des contraintes liées à l'intégration d'un oscillateur dans une carte à puce. Il est ainsi possible de réaliser une carte relativement bon marché tout en assurant une grande flexibilité d'utilisation.

### EXPOSE DE L'INVENTION

Le but de l'invention est atteint par un dispositif tel que défini en préambule et **caractérisé en ce qu**'il comprend un module de détection de fréquence d'horloge connecté à une entrée d'horloge de l'interface 7816, ce module de détection comprenant des moyens pour discriminer la fréquence d'entrée selon au moins deux plages de fréquence distinctes, l'une desdites plages de fréquence activant la fonction USB.

Le but de l'invention est également atteint par un procédé de traitement d'un signal audio/vidéo tel que défini en préambule et **caractérisé en ce qu**'il comprend les étapes suivantes :
- envoi d'un signal d'horloge à une entrée d'horloge de l'interface ISO 7816 selon une fréquence prédéfinie;
- détermination d'une plage de fréquence à laquelle appartient ladite fréquence prédéfinie;
- détermination du mode de fonctionnement du dispositif de sécurité selon la plage de fréquence d'horloge déterminée;
- traitement des données selon le mode de fonctionnement déterminé.

Ce module de sécurité ne nécessite pas d'horloge interne, tout en offrant la possibilité de fonctionner selon différents modes. De plus, la détection du mode de fonctionnement est réalisée de façon automatique, sans qu'il soit nécessaire d'imposer un signal ou d'utiliser un contact spécifique pour signaler un changement de mode.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 représente schématiquement le dispositif de sécurité selon un premier mode de réalisation de la présente invention;
- les figures 2 et 3 représentent deux autres modes de réalisation du dispositif de sécurité de l'invention.

### MANIÈRE DE RÉALISER L'INVENTION

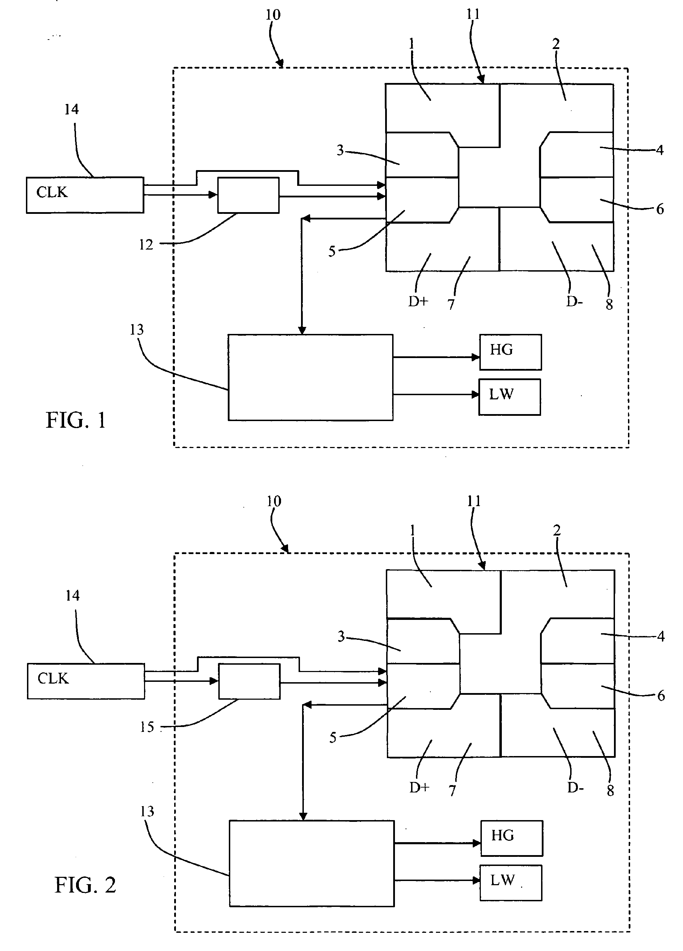

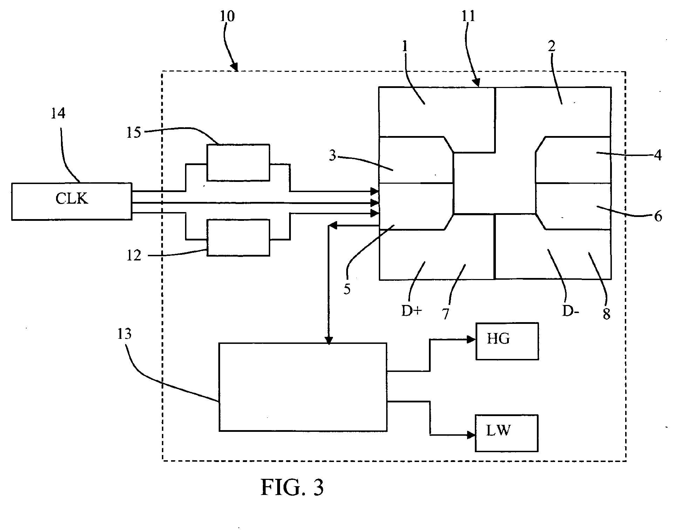

En référence aux figures 1 et 3, le dispositif de sécurité 10 selon la présente invention comporte essentiellement une puce 11 répondant à la norme ISO 7816, un diviseur de fréquence 12 et un détecteur de fréquence 13.

Le dispositif coopère en outre avec un générateur de signaux d'horloge 14 qui est placé à l'extérieur du dispositif. Selon un exemple de réalisation concret dans lequel le dispositif de l'invention est utilisé dans le domaine de la télévision à péage, le générateur de signaux d'horloge est placé dans un décodeur. Ce décodeur comporte en outre un lecteur de cartes à puce dans lequel le dispositif de l'invention est introduit lorsque l'ensemble est en fonction.

La norme ISO 7816 défini notamment qu'une puce conforme à cette norme comporte huit contacts, numérotés de 1 à 8 sur les figures. Le contact référencé par 1 (Vcc) est chargé d'assurer l'alimentation électrique de la puce de la carte. Le contact 2 (GND) assure la mise à la masse de cette puce. Le contact 3 (RST) permet la réinitialisation. Le contact 4 (Vpp) assure l'alimentation de la puce en tension de programmation. Le contact 5 (CLK) permet l'entrée d'un signal d'horloge et le contact 6 (I/O) permet l'entrée/sortie des données.

Selon le mode de réalisation de la figure 1, le générateur de signaux d'horloge 14 génère des signaux à une fréquence suffisamment élevée pour permettre le fonctionnement dans le mode requérant la fréquence la plus élevée, c'est-à-dire le mode USB. Cette fréquence est généralement de 30MHz selon la norme USB. Les signaux pour le mode USB sont donc générés à l'extérieur de la carte, au moyen du générateur, qui n'est pas soumis à des contraintes de volume ou autres, puis ces signaux sont transmis à la carte sur le port 5 (CLK) de la puce. En utilisant un générateur extérieur, il est possible d'assurer une bonne précision du signal, ce qui est indispensable pour un fonctionnement fiable en mode USB.

Le dispositif de sécurité selon l'invention comporte, comme mentionné précédemment, un diviseur de fréquence 12. Celui-ci est avant tout prévu pour diviser la fréquence de façon à la rendre compatible avec le mode requérant la fréquence la plus basse, c'est-à-dire le mode ISO 7816. Cette fréquence est généralement de l'ordre de 3 à 5 MHz. De façon bien connue, le diviseur de fréquence peut être réalisé au moyen d'un compteur, ce qui permet de diviser la fréquence d'origine par n'importe quelle valeur entière, ou par des étages successifs de diviseurs de fréquence par 2, ce qui permet de diviser la fréquence initiale par des puissances de 2. Le diviseur de fréquence peut également être agencé pour diviser la fréquence générée par le générateur de signaux de façon à la rendre compatible avec le mode USB si celle-ci est trop élevée.

La sortie du diviseur de fréquence 12 est connectée au contact 5 (CLK) de la puce de façon à fournir à cette puce le signal d'horloge requis.

Comme indiqué sur la figure, il est possible de fournir le signal d'horloge soit directement à la puce, soit indirectement, c'est-à-dire après passage par le diviseur, en fonction de la fréquence générée et de la fréquence requise. Il est également possible d'utiliser un diviseur de fréquence capable d'effectuer des divisions différentes selon les besoins. Selon un exemple concret, la fréquence générée pourrait être divisée par 2 pour permettre le fonctionnement en mode USB et par 12 pour permettre le fonctionnement en mode ISO 7816.

Le module de sécurité selon l'invention comporte en outre un détecteur de fréquence 13 agencé pour déterminer la fréquence d'horloge utilisée ou au moins une plage de fréquence. A titre d'exemple, le détecteur peut être prévu non pas pour détecter la fréquence absolue, mais uniquement pour détecter une plage de fréquence. Une première plage de fréquence pourrait être de 1 à 7 MHz correspondant à une fréquence basse notée LW, et une seconde plage de fréquence de 15 à 45 Mhz correspondant à une fréquence haute notée HG. Idéalement, les deux plages de fréquence sont disjointes, de sorte qu'il n'y a pas de risque de confusion possible entre elles. Il est clair, selon le mode de réalisation concret décrit ci-dessus, que la plage de fréquence haute implique un mode de fonctionnement USB alors que la plage de fonctionnement basse implique un fonctionnement selon la norme ISO 7816.

La figure 2 illustre un mode de réalisation dans lequel le dispositif de sécurité de l'invention comporte un multiplicateur de fréquence 15 à la place du diviseur de la figure 1. Dans ce cas, au lieu d'utiliser un générateur de signaux d'horloge fournissant une fréquence compatible avec le mode de fonctionnement requérant la fréquence la plus élevée, le générateur fournit un signal ayant la fréquence la plus basse. Ce signal peut être envoyé directement à la puce en cas de fonctionnement selon la norme ISO 7816 ou être envoyé au multiplicateur de fréquence.

Celui-ci multiplie alors la fréquence par une valeur qui la rend compatible avec le fonctionnement en mode USB.

Dans les exemples mentionnés dans la présente demande, il est indiqué que la fréquence en mode USB est de 30 MHz. Selon la fréquence du générateur d'horloge et les caractéristiques du multiplicateur, la fréquence fournie au contact CLK de la puce peut être différente de 30 MHz. Une telle fréquence différente pourrait être utilisée pour autant que le décodeur et la carte à puce utilisent tous deux la même fréquence.

La figure 3 illustre un mode de réalisation particulier qui est une combinaison des modes de réalisation des figures 1 et 2. Le dispositif de sécurité comporte à la fois un diviseur 12 et un multiplicateur 15 de fréquences.

Ce dispositif présente l'avantage qu'il peut être utilisé indifféremment avec un appareil générant une fréquence d'horloge compatible avec le mode USB ou avec un appareil générant une fréquence d'horloge compatible avec le mode ISO 7816. Dans le cas où la fréquence générée correspond au mode USB, le dispositif de l'invention utilise le diviseur de fréquence pour générer la fréquence d'horloge compatible avec le mode ISO 7816. Dans le cas où la fréquence d'horloge générée correspond au mode ISO 7816, le dispositif utilise le multiplicateur de fréquence pour générer une fréquence élevée correspondant au mode d'utilisation conforme à la norme USB.

Il est également possible de prévoir que les signaux générés par le générateur de signaux d'horloge aient une fréquence intermédiaire entre la fréquence utilisée dans le mode ISO 7816 et celle correspondant au mode USB, par exemple 15 MHz. Dans ce cas, lorsque le dispositif fonctionne en mode ISO 7816, les signaux du générateur de signaux d'horloge sont transmis au diviseur de fréquence avant d'être envoyés à la carte. Au contraire, lorsque le dispositif fonctionne en mode USB, les signaux du générateur sont envoyés au multiplicateur de fréquence avant d'être envoyés à la carte.

Dans tous les cas, le signal entré sur le contact 5 de la puce est également transmis au détecteur de fréquence 13. Celui-ci peut donc déterminer automatiquement le mode de fonctionnement requis selon la fréquence absolue ou une plage de fréquences. Dans les modes de réalisation des figures 1 et 2, il y a une fréquence haute correspondant au mode USB et une fréquence basse correspondant au mode ISO 7816. Comme dans les cas précédents, les plages de fréquence sont disjointes de sorte qu'il n'y a pas de risque de confusion entre elles.

Lorsque le dispositif de sécurité a déterminé dans quel mode de fonctionnement il doit travailler, il effectue les opérations requises de façon conventionnelle. Dès que la fréquence d'horloge change, le mode de fonctionnement change également et le traitement des informations est adapté en conséquence.

Dans le dispositif selon l'invention, il n'y a pas de gestion particulière du mode de fonctionnement de la puce. Il est uniquement nécessaire d'agir sur la fréquence de l'horloge pour que ce mode de fonctionnement soit aussitôt adapté. Ceci présente l'avantage qu'il est possible de changer très fréquemment de mode de fonctionnement, ce qui est nécessaire en particulier dans une application telle que la télévision à péage dans laquelle le changement entre traitement du flux de données requérant un fonctionnement en mode USB et traitement des messages de contrôle requérant un fonctionnement en mode ISO 7816 est fréquent et doit être rapide.

La présente invention a été décrite en référence à un mode de réalisation dans lequel le dispositif de sécurité a la forme d'une carte à puce. Il est toutefois également possible que ce dispositif ait une autre forme, par exemple la forme d'une clé ou d'un objet quelconque.

Selon un cas particulier, il est possible de prévoir que l'un des modes de fonctionnement, par exemple le mode USB soi inactif par défaut et qu'il soit nécessaire d'envoyer une commande particulière pour activer ce mode.

## Revendications

1. Dispositif de sécurité destiné à être connecté à une unité de traitement d'un signal audio/vidéo, ce dispositif comprenant des moyens pour déchiffrer un flux audio/vidéo, une interface de type ISO 7816 et une interface de type USB, **caractérisé en ce qu'**il comprend un module de détection de fréquence d'horloge connecté à une entrée d'horloge de l'interface 7816, ce module de détection comprenant des moyens pour discriminer la fréquence d'entrée selon au moins deux plages de fréquence distinctes, l'une desdites plages de fréquence activant la fonction USB.

2. Dispositif de sécurité selon la revendication 1, **caractérisé en ce que** le module de sécurité comprend au moins un diviseur de fréquence pour produire une fréquence à partir d'une fréquence supérieure.

3. Dispositif de sécurité selon la revendication 1 ou 2, **caractérisé en ce que** le module de sécurité comprend au moins un multiplicateur de fréquence pour produire une fréquence à partir d'une fréquence inférieure.

4. Procédé de traitement d'un signal audio/vidéo au moyen d'un dispositif de sécurité comprenant des moyens pour déchiffrer un flux audio/vidéo, une interface de type ISO 7816 et une interface de type USB, ce procédé étant **caractérisé en ce qu'**il comprend les étapes suivantes :
• envoi d'un signal d'horloge à une entrée d'horloge de l'interface ISO 7816 selon une fréquence prédéfinie;
• détermination d'une plage de fréquence à laquelle appartient ladite fréquence prédéfinie;
• détermination du mode de fonctionnement du dispositif de sécurité selon la plage de fréquence d'horloge déterminée;
• traitement des données selon le mode de fonctionnement déterminé.

5. Procédé de traitement d'un signal audio/vidéo selon la revendication 4, **caractérisé en ce que** le signal d'horloge est envoyé a une fréquence dite haute et **en ce que** le signal ayant cette fréquence est transmis à l'entrée d'horloge par l'intermédiaire d'un diviseur de fréquence lorsque le dispositif de sécurité fonctionne dans un mode utilisant une fréquence basse.

6. Procédé de traitement d'un signal audio/vidéo selon la revendication 4, **caractérisé en ce que** le signal d'horloge est envoyé a une fréquence dite basse et **en ce que** le signal ayant cette fréquence est transmis à l'entrée d'horloge par l'intermédiaire d'un multiplicateur de fréquence lorsque le dispositif de sécurité fonctionne dans un mode utilisant une fréquence haute.

7. Procédé de traitement d'un signal audio/vidéo selon la revendication 4, **caractérisé en ce que** le signal d'horloge est envoyé a une fréquence intermédiaire et **en ce que** le signal ayant cette fréquence est transmis à l'entrée d'horloge par l'intermédiaire d'un multiplicateur de fréquence lorsque le dispositif de sécurité fonctionne dans un mode utilisant une fréquence dite haute et **en ce que** ce signal est transmis à l'entrée d'horloge par l'intermédiaire d'un diviseur de fréquence lorsque le dispositif de sécurité fonctionne dans un mode utilisant une fréquence dite basse.

## Claims

1. Security device configured to be connected to an audio/video signal processing unit, said device comprising means to decrypt an audio/video data stream, an interface of type ISO 7816 and an interface of type USB, said device **characterised in that** it comprises a clock frequency detection module connected to a clock input of the 7816 interface, said detection module comprising means for distinguishing between at least two distinct input frequency ranges, one of said frequency ranges activating the USB function.

2. Security device according to claim 1, **characterised in that** the security device comprises at least one frequency divider to produce a frequency from a higher frequency.

3. Security device according to either of claims 1 or 2, **characterised in that** the security device comprises at least one frequency multiplier to produce a frequency from a lower frequency.

4. Signal processing method for an audio/video signal using a security device comprising means for decrypting an audio/video data stream, an interface of type ISO 7816 and an interface of type USB, said method **characterised in that** it comprises the following steps:
- sending a clock signal to a clock input of the ISO 7816 interface according to a predefined frequency;
- determining a frequency range to which said predefined frequency pertains;
- determining a functional mode for the security device according to the determined frequency range;
- data-processing according to the determined functional mode.

5. Signal processing method for an audio/video signal according to claim 4, **characterised in that** the clock signal is sent at a so-called high frequency and **in that** the signal having this frequency is sent to the clock input via a frequency divider whenever the security device functions in a mode which uses a low frequency.

6. Signal processing method for an audio/video signal according to claim 4, **characterised in that** the clock signal is sent at a so-called low frequency and **in that** the signal having this frequency is sent to the clock input via a frequency multiplier whenever the security device functions in a mode which uses a high frequency.

7. Signal processing method for an audio/video signal according to claim 4, **characterised in that** the clock signal is sent at an intermediate frequency and **in that** the signal having this frequency is sent to the clock input via a frequency multiplier whenever the security device functions in a mode which uses a so-called high frequency and **in that** this signal is sent to the clock input via a frequency divider whenever the security device functions in a mode which uses a so-called low frequency.

## Patentansprüche

1. Sicherheitsvorrichtung, die an eine Einheit zur Bearbeitung eines Audio-Nideosignals angeschlossen wird; diese Vorrichtung enthält Mittel, um einen Audio-Nideofluss, eine Schnittstelle des Typs ISO 7816 und eine Schnittstelle des Typs USB zu dechiffrieren, **gekennzeichnet dadurch, dass** sie ein Modul zur Erkennung der Taktfrequenz enthält, das an einen Takteingang der Schnittstelle 7816 angeschlossen ist, dieses Erkennungsmodul enthält Mittel zur Unterscheidung der Eingangsfrequenz gemäß mindestens zwei verschiedenen Frequenzbereichen, wobei einer der genannten Frequenzbereiche die USB-Funktion aktiviert.

2. Sicherheitsvorrichtung gemäß Anspruch 1, **gekennzeichnet dadurch, dass** das Sicherheitsmodul mindestens einen Frequenzteiler enthält, um eine Frequenz aus einer höheren Frequenz zu erstellen.

3. Sicherheitsvorrichtung gemäß Anspruch 1 oder 2, **gekennzeichnet dadurch, dass** das Sicherheitsmodul mindestens einen Frequenzvervielfacher enthält, um eine Frequenz aus einer niedrigeren Frequenz zu erstellen.

4. Verfahren zur Bearbeitung eines Audio-Nideosignals mithilfe einer Sicherheitsvorrichtung, die Mittel enthält, um einen Audio-/Videofluss, eine Schnittstelle des Typs ISO 7816 und eine Schnittstelle des Typs USB zu dechiffrieren, dieses Verfahren ist **dadurch gekennzeichnet, dass** es die folgenden Schritte enthält:
• Aussenden eines Taktsignals an einem Takteingang der Schnittstelle ISO 7816 entsprechend einer zuvor festgelegten Frequenz;
• Bestimmung eines Frequenzbereichs, dem die genannte, zuvor festgelegte Frequenz angehört;
• Bestimmung einer Funktionsweise der Sicherheitsvorrichtung entsprechend dem festgelegten Taktfrequenzbereich;
• Datenverarbeitung entsprechend der festgelegten Funktionsweise.

5. Verfahren zur Bearbeitung eines Audio-/Videosignals gemäß Anspruch 4, **gekennzeichnet dadurch, dass** das Taktsignal mit einer sogenannten hohen Frequenz ausgesandt wird und dass das Signal mit dieser Frequenz durch einen Frequenzteiler an den Takteingang übertragen wird, wenn die Sicherheitsvorrichtung in einem Modus unter Verwendung einer niedrigen Frequenz funktioniert.

6. Verfahren zur Bearbeitung eines Audio-Nideosignals gemäß Anspruch 4, **gekennzeichnet dadurch, dass** das Taktsignal mit einer sogenannten niedrigen Frequenz ausgesandt wird und dass das Signal mit dieser Frequenz durch einen Frequenzvervielfacher an den Takteingang übertragen wird, wenn die Sicherheitsvorrichtung in einem Modus unter Verwendung einer hohen Frequenz funktioniert.

7. Verfahren zur Bearbeitung eines Audio-/Videosignals gemäß Anspruch 4, **gekennzeichnet dadurch, dass** das Taktsignal mit einer Zwischenfrequenz ausgesandt wird und dass das Signal mit dieser Frequenz durch einen Frequenzvervielfacher an den Takteingang übertragen wird, wenn die Sicherheitsvorrichtung in einem Modus unter Verwendung einer sogenannten hohen Frequenz funktioniert und dass dieses Signal durch einen Frequenzteiler an den Takteingang übertragen wird, wenn die Sicherheitsvorrichtung in einem Modus unter Verwendung einer sogenannten niedrigen Frequenz funktioniert.
